(19) Europäisches Patentamt
European Patent Office
Office européen des brevets

(11) **EP 2 743 508 B1**

(12) **FASCICULE DE BREVET EUROPEEN**

(45) Date de publication et mention de la délivrance du brevet:
**14.10.2015 Bulletin 2015/42**

(51) Int Cl.:
*F04D 13/12* (2006.01)       *F04D 15/00* (2006.01)
*G01F 1/34* (2006.01)

(21) Numéro de dépôt: **13192701.4**

(22) Date de dépôt: **13.11.2013**

(54) **Procédé de commande pour système multipompes, et système multipompes**

Regelverfahren einer Mehrpumpenanlage, sowie Mehrpumpenanlage

Control method for a multipump system, and multipump system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2012 FR 1262146**

(43) Date de publication de la demande:
**18.06.2014 Bulletin 2014/25**

(73) Titulaire: **Schneider Toshiba Inverter Europe SAS**
**27120 Pacy sur Eure (FR)**

(72) Inventeur: **Coin, Sylvain**
**27220 BRETAGNOLLES (FR)**

(74) Mandataire: **Bié, Nicolas et al**
**Schneider Electric Industries SAS**
**Service Propriété Industrielle**
**35 rue Joseph Monier - CS 30323**
**92506 Rueil-Malmaison Cedex (FR)**

(56) Documents cités:
**WO-A1-00/57063      JP-A- 2004 124 814**
**JP-A- 2006 307 682**

## Description

### Domaine technique de l'invention

La présente invention se rapporte à un procédé de commande pour système multipompes.

### Etat de la technique

Un système multipompes comporte au moins deux pompes, au moins l'une de ces deux pompes étant à vitesse variable contrôlée en vitesse par un variateur de vitesse et l'autre à vitesse fixe ou à vitesse variable. Dans le système multipompes, les deux pompes sont connectées en parallèle à un même conduit d'entrée et leurs sorties se rejoignent dans un conduit de sortie commun.

Certaines solutions de commande d'un système multipompes nécessitent une mesure de débit total sur le conduit de sortie. Pour mesurer ce débit, les solutions actuelles emploient un débitmètre ou utilisent des méthodes peu satisfaisantes. C'est notamment le cas dans les brevets JP2004/124814 et WO0057063. Un besoin existe donc aujourd'hui de pouvoir estimer de manière simple, avec un minimum de capteurs, le débit total d'un fluide circulant dans le conduit de sortie du système multipompes.

Le but de l'invention est donc de proposer un procédé de commande mis en oeuvre dans une unité de traitement, permettant de pouvoir déterminer le débit total d'un fluide circulant à travers le conduit de sortie, sans l'emploi d'un débitmètre, ce procédé étant simple à mettre en oeuvre et ne nécessitant qu'un minimum de capteurs.

### Exposé de l'invention

Ce but est atteint par un procédé de commande mis en oeuvre dans une unité de traitement employée dans la commande d'un système multipompes, ledit système multipompes comprenant un conduit d'entrée destiné à recevoir un fluide, deux pompes connectées en parallèle audit conduit d'entrée et un conduit de sortie relié aux sorties des deux pompes, au moins l'une des deux pompes étant commandée par un variateur de vitesse, ledit procédé étant destiné à déterminer le débit total ($Q_{total}$) du fluide sur ledit conduit de sortie, chaque pompe étant définie par une courbe caractéristique débit-hauteur manométrique à vitesse maximale, le procédé de commande comportant les étapes suivantes :

- détermination d'une première expression de la hauteur manométrique du système multipompes à partir des caractéristiques du système multipompes, lesdites caractéristiques du système étant :

  - la pression du fluide, mesurée à un premier point de mesure situé sur le conduit de sortie,
  - la pression du fluide, mesurée à un deuxième point de mesure situé sur le conduit d'entrée,
  - le diamètre du conduit de sortie au premier point de mesure,
  - le diamètre du conduit d'entrée au deuxième point de mesure,
  - la différence de hauteur entre le premier point de mesure et le deuxième point de mesure.

Selon l'invention, le procédé comporte une étape de détermination d'une deuxième expression de la hauteur manométrique du système multipompes en fonction du débit total. Le procédé comporte ensuite une étape de détermination du débit total du fluide à travers le conduit de sortie à partir de la première expression de la hauteur manométrique et de la deuxième expression de la hauteur manométrique.

Selon l'invention, la deuxième expression de la hauteur manométrique est déterminée à partir de la vitesse de chaque pompe, et de la courbe caractéristique débit-hauteur manométrique à vitesse maximale de chaque pompe.

Selon une particularité de l'invention, le procédé comporte une étape de détermination de la hauteur manométrique du système multipompes à partir de la première expression de la hauteur manométrique du système multipompes et du débit total injecté en tant que paramètre de rétroaction.

Selon une autre particularité, le procédé comporte une étape de détermination d'une valeur de débit de chaque pompe à partir de la courbe caractéristique débit-hauteur manométrique de chaque pompe, extrapolée à la vitesse de chaque pompe, et de la hauteur manométrique déterminée.

Selon une autre particularité, le procédé comporte une étape de détermination du débit total du fluide à travers le conduit de sortie du système multipompes à partir des valeurs de débit déterminées pour chaque pompe.

Selon une autre particularité, la vitesse de la pompe contrôlée par le variateur de vitesse est déterminée à partir d'une référence de vitesse injectée dans une boucle de régulation ou d'une mesure de vitesse.

Selon une autre particularité, le procédé comporte une étape de détermination de la hauteur manométrique du système multipompes à partir de la première expression de la hauteur manométrique et de la deuxième expression de la hauteur manométrique.

Selon une autre particularité, pour chaque pompe, il comporte une étape de détermination du débit en sortie de la pompe à partir de la hauteur manométrique déterminée et de la courbe caractéristique débit-hauteur manométrique de la pompe, extrapolée à la vitesse de la pompe.

Selon une autre particularité, la vitesse de la pompe contrôlée par le variateur de vitesse est déterminée à partir de la référence de vitesse injectée dans une boucle de régulation ou d'une mesure de vitesse.

L'invention concerne également un variateur de vitesse comportant une unité de traitement agencée pour mettre en oeuvre le procédé de commande tel que défini ci-dessus.

**Brève description des figures**

D'autres caractéristiques et avantages vont apparaître dans la description détaillée qui suit faite en regard des dessins annexés listés ci-dessous :

- la figure 1 représente un système multipompes, l'une des pompes étant commandée par un variateur de vitesse,

- la figure 2 illustre, de manière schématique, le principe de fonctionnement d'un procédé de commande ne faisant pas partie de l'invention

- la figure 3 illustre, de manière schématique, le principe de fonctionnement du procédé de commande de l'invention.

**Description détaillée d'au moins un mode de réalisation**

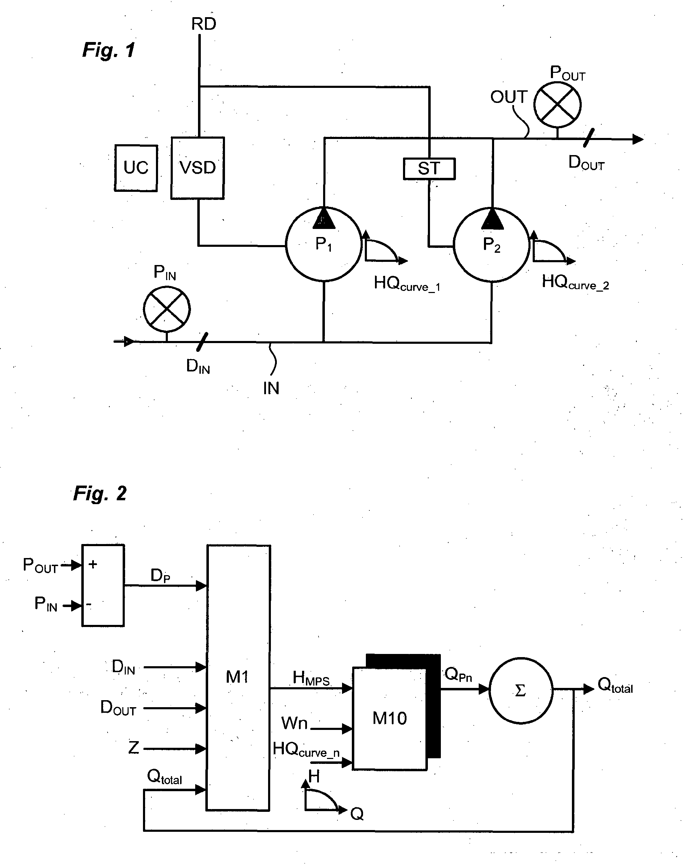

En référence à la figure 1, un système multipompes comporte au moins deux pompes $P_1$, $P_2$ connectées en parallèle. Chaque pompe est par exemple de type centrifuge et est destiné à aspirer un fluide par une entrée et à le refouler par une sortie. Une pompe peut être à vitesse variable ($P_1$), contrôlée par un variateur de vitesse VSD, ou à vitesse fixe ($P_2$) commandée par un simple démarreur ST. Dans un système multipompes, au moins l'une des deux pompes est à vitesse variable, tandis que l'autre peut être à vitesse variable ou à vitesse fixe.

Dans la suite de la description, nous considérerons un système multipompes à seulement deux pompes $P_1$, $P_2$ (désignées $P_n$ de manière générale). Bien entendu, l'invention peut tout à fait s'appliquer à un système comportant plus de deux pompes.

Dans le système multipompes, les deux pompes $P_1$, $P_2$ employées sont reliées en parallèle. Elles sont alimentées par un réseau de distribution électrique RD. Ainsi, le système comporte un conduit d'entrée IN commun joignant les entrées des deux pompes $P_1$, $P_2$ et un conduit de sortie OUT commun joignant les sorties des deux pompes $P_1$, $P_2$. La pompe $P_1$ est commandée par un variateur de vitesse VSD.

Le système multipompes comporte également un premier capteur de pression placé sur le conduit d'entrée, afin de mesurer la pression $P_{IN}$ du fluide en entrée et un second capteur de pression placé sur le conduit de sortie afin de mesurer la pression $P_{OUT}$ du fluide en sortie.

Par ailleurs, de manière connue, chaque pompe $P_1$, $P_2$ est définie par une courbe caractéristique de pompe ($HQ_{curve\_1}$ $HQ_{curve\_2}$ désignée de manière générale $HQ_{curve\_n}$). Cette courbe illustre la relation existant entre la hauteur manométrique H de la pompe et son débit volumique Q à vitesse maximale. La hauteur manométrique H de la pompe s'exprime en mètre tandis que le débit volumique Q s'exprime par exemple en $m^3$/heure.

Le procédé de commande de l'invention est mis en oeuvre dans une unité de traitement UC. Cette unité de traitement UC est par exemple incluse dans le variateur de vitesse VSD employé pour le contrôle d'une ou plusieurs pompes du système multipompes.

Ce procédé de commande vise tout d'abord à déterminer une expression de la hauteur manométrique $H_{MPS}$ (pour "*Multi-Pump System*") en fonction de caractéristiques du système. Au point de fonctionnement considéré, la hauteur manométrique $H_{MPS}$ du système multipompes est identique pour toutes les pompes $P_n$, que celles-ci soient à vitesse fixe ou à vitesse variable. Les caractéristiques du système multipompes sont les suivantes :

- la différence de pression $D_P$ correspondant à la différence entre la pression $P_{IN}$ mesurée par le premier capteur sur le conduit d'entrée et la pression $P_{OUT}$ mesurée par le second capteur sur le conduit de sortie,
- le diamètre $D_{IN}$ du conduit d'entrée IN au point de mesure de la pression,
- le diamètre $D_{OUT}$ du conduit de sortie OUT au point de mesure de la pression,
- la différence de hauteur Z entre les deux points de mesure de pression.

A partir de ces paramètres caractéristiques du système multipompes et du théorème de Bernouilli défini ci-dessous, le procédé de commande peut exprimer la hauteur manométrique :

$$D_P = \rho.g.\left[H_{MPS} - Z - \left(\left(\frac{4.Q_{total}}{\pi.D_{OUT}^2}\right)^2 - \left(\frac{4.Q_{total}}{\pi.D_{IN}^2}\right)^2\right)/2.g\right]$$

Dans lequel :

- p représente la densité du fluide aspiré par le système multipompes,
- $D_P$ représente la différence de pression,
- $H_{MPS}$ représente la hauteur manométrique recherchée,
- Z représente la hauteur géométrique entre le point de mesure de la pression à l'aspiration et le point de mesure de la pression au refoulement,
- g représente la constante de gravité,
- $Q_{total}$ représente le débit total sur le conduit de sortie.

On obtient alors :

$$\begin{cases} H_{MPS} = f(D_P, Q_{total}) \\ Q_{total} = \sum Q_{Pn} \end{cases}$$

Avec $Q_{Pn}$ qui représente le débit de chaque pompe du système multipompes.

Dans le mode de réalisation ne faisant pas partie de l'invention illustré par la figure 2, le procédé de commande consiste tout d'abord à déterminer la hauteur manométrique H. Pour déterminer la hauteur manométrique $H_{MPS}$, l'unité de traitement UC lance un premier module logiciel M1 recevant en entrée les caractéristiques du système multipompes, c'est-à-dire :

- la différence de pression $D_P$ correspondant à la différence entre la pression $P_{IN}$ mesurée par le premier capteur sur le conduit d'entrée et la pression $P_{OUT}$ mesurée par le second capteur sur le conduit de sortie,

- la valeur de diamètre $D_{IN}$ du conduit d'entrée,

- la valeur de diamètre $D_{OUT}$ du conduit de sortie,

- la différence de hauteur Z entre les deux points de mesure de pression par le premier capteur et le second capteur.

Il reçoit également en entrée la valeur du débit total $Q_{total}$ comme paramètre de rétroaction, c'est-à-dire le débit total déterminé à l'occurrence n-1. La boucle ainsi formée permet de converger naturellement vers une valeur la plus exacte possible de la hauteur manométrique $H_{MPS}$.

Une fois la hauteur manométrique $H_{MPS}$ déterminée, l'unité de traitement UC lance, pour chaque pompe $P_n$, un deuxième module logiciel M10 permettant de déterminer le débit $Q_{Pn}$ en sortie de la pompe. Ce module reçoit en entrée les valeurs suivantes :

- la valeur de la hauteur manométrique $H_{MPS}$ déterminée par le premier module logiciel,

- une valeur de la vitesse $W_n$ de la pompe considérée dans le système multipompes,

- la courbe caractéristique débit/hauteur manométrique ($HQ_{curve\_n}$) de la pompe dont le débit est recherché, qui sera extrapolée à la vitesse $W_n$ de la pompe, en utilisant les lois d'affinité des pompes centrifuges.

La vitesse $W_n$ de la pompe peut être issue de différentes sources. Pour une pompe à vitesse variable, cette vitesse peut être basée sur la référence de vitesse appliquée en entrée de la boucle de régulation du variateur de vitesse ou sur une mesure de vitesse. Pour une pompe à vitesse fixe, il s'agit juste de tenir compte de la dynamique de fonctionnement de la pompe.

[0030] - Une fois que l'unité de traitement UC a déterminé le débit $Q_{Pn}$ du fluide en sortie de chaque pompe, il ne lui reste plus qu'à additionner ces débits pour obtenir le débit total $Q_{total}$. Le débit total $Q_{total}$ déterminé est envoyé comme paramètre d'entrée du premier module logiciel de détermination afin de converger naturellement vers la valeur la plus précise possible de la hauteur manométrique $H_{MPS}$, et ainsi celle du débit total résultant.

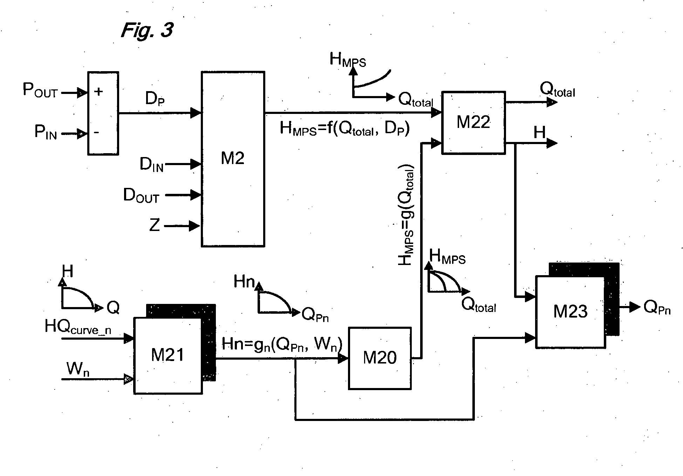

La figure 3 illustre le mode de réalisation de l'invention. Dans ce mode de réalisation, la hauteur manométrique $H_{MPS}$ est déterminée notamment à partir de son expression définie ci-dessus, en fonction des caractéristiques du système. Dans la description de ce mode de réalisation, on distingue la hauteur manométrique $H_{MPS}$ du système multipompes de la hauteur manométrique $H_n$ définie pour chaque pompe $P_n$.

L'unité de traitement UC lance d'abord un premier module logiciel M2 de détermination de cette expression de la hauteur manométrique $H_{MPS}$ en fonction du débit total $Q_{total}$ et de la différence de pression $D_P$. Les caractéristiques introduites en entrée du premier module M2 sont les suivantes :

- la différence de pression $D_P$ qui consiste en la différence entre la pression $P_{IN}$ mesurée par le premier capteur sur le conduit d'entrée et la pression $P_{OUT}$ mesurée par le second capteur sur le conduit de sortie,

- la valeur de diamètre $D_{IN}$ du conduit d'entrée,

- la valeur de diamètre $D_{OUT}$ du conduit de sortie,

- la différence Z de hauteur entre les deux points de mesure de pression par le premier capteur et le second capteur.

Ainsi on a $H_{MPS}=f(Q_{total}, D_P)$ avec f qui est une fonction.

En parallèle, l'unité de traitement UC détermine une deuxième expression de la hauteur manométrique $H_{MPS}$ du système multipompes en fonction du débit total $Q_{total}$ du système multipompes. Pour cela, l'unité de traitement UC détermine grâce à un module logiciel M21, pour chaque pompe $P_n$, sa courbe caractéristique ($H_n=g_n(Qp_n, W_n)$) exprimant la hauteur manométrique $H_n$ de la pompe en fonction du débit $Q_{Pn}$ de la pompe, extrapolée à la vitesse de la pompe considérée en utilisant les lois d'affinité des pompes centrifuges. Une fois que l'unité de traitement UC a récupéré toutes les courbes de pompe, elle reconstitue grâce à un module logiciel M20 la courbe globale ($H_{MPS}=g(Q_{total})$) du système multipompes.

Pour déterminer le débit total $Q_{total}$, l'unité de traitement UC lance un module logiciel M22 de détermination du débit total $Q_{total}$ à partir des deux expressions. Autrement dit, le débit total $Q_{total}$ correspond au point d'intersection d'une première courbe correspondant à la première expression ($H_{MPS}=f(Q_{total}, D_P)$) et d'une deuxième courbe correspondant à la deuxième expression ($H_{MPS}=g(Q_{total})$).

A partir des deux courbes, l'unité de traitement UC peut également déduire, de manière optionnelle, la valeur de la hauteur manométrique $H_{MPS}$ du système multipompes. Cette hauteur manométrique $H_{MPS}$ du système multipompes peut ensuite être employée pour déterminer (module logiciel M23) le débit $Q_{Pn}$ de chaque pompe $P_n$ grâce aux courbes caractéristiques de chaque pompe, extrapolées à la vitesse de chaque pompe ($H=g_n(Q_{Pn}, W_n)$), en utilisant les lois d'affinité des pompes centrifuges.

**Revendications**

1. Procédé de commande mis en oeuvre dans une unité de traitement (UC) employée dans la commande d'un système multipompes, ledit système multipompes comprenant un conduit d'entrée (IN) destiné à recevoir un fluide, deux pompes ($P_1$, $P_2$) connectées en parallèle audit conduit d'entrée et un conduit de sortie relié aux sorties des deux pompes ($P_1$, $P_2$), au moins l'une des deux pompes étant commandée par un variateur de vitesse (VSD), ledit procédé étant destiné à déterminer le débit total ($Q_{total}$) du fluide sur ledit conduit de sortie (OUT), chaque pompe ($P_1$, $P_2$) étant définie par une courbe caractéristique débit-hauteur manométrique à vitesse maximale, le procédé de commande comportant les étapes suivantes :

   - détermination d'une première expression de la hauteur manométrique ($H_{MPS}$) du système multipompes à partir des caractéristiques du système multipompes, lesdites caractéristiques du système étant :

      - la pression ($P_{OUT}$) du fluide, mesurée à un premier point de mesure situé sur le conduit de sortie,
      - la pression ($P_{IN}$) du fluide, mesurée à un deuxième point de mesure situé sur le conduit d'entrée,
      - le diamètre ($D_{OUT}$) du conduit de sortie au premier point de mesure,
      - le diamètre ($D_{IN}$) du conduit d'entrée au deuxième point de mesure,
      - la différence (Z) de hauteur entre le premier point de mesure et le deuxième point de mesure.

   - détermination d'une deuxième expression de la hauteur manométrique ($H_{MPS}$) du système multipompes en fonction du débit total ($Q_{total}$) à partir de la vitesse ($W_n$) de chaque pompe, et de la courbe caractéristique débit-hauteur manométrique ($HQ_{curve\_n}$) à vitesse maximale de chaque pompe,

- détermination du débit total ($Q_{total}$) du fluide à travers le conduit de sortie (OUT) à partir de la première expression de la hauteur manométrique ($H_{MPS}$) et de la deuxième expression de la hauteur manométrique ($H_{MPS}$), le débit total correspondant à un point d'intersection d'une première courbe correspondant à la première expression et d'une deuxième courbe correspondant à la deuxième expression.

2. Procédé selon la revendication 1, **caractérisé en ce qu'**il comporte une étape de détermination de la hauteur manométrique ($H_{MPS}$) du système multipompes à partir de la première expression de la hauteur manométrique et de la deuxième expression de la hauteur manométrique.

3. Procédé selon la revendication 2, **caractérisé en ce que** pour chaque pompe ($P_1$, $P_2$), il comporte une étape de détermination du débit ($Q_{Pn}$) en sortie de la pompe à partir de la hauteur manométrique ($H_{MPS}$) déterminée et de la courbe caractéristique débit-hauteur manométrique ($HQ_{curve\_n}$) de la pompe, extrapolée à la vitesse de la pompe.

4. Procédé selon l'une des revendications 1 à 3, **caractérisé en ce que** la vitesse de la pompe ($W_n$) contrôlée par le variateur de vitesse est déterminée à partir de la référence de vitesse injectée dans une boucle de régulation ou d'une mesure de vitesse.

5. Système multipompes comprenant :

- un conduit d'entrée (IN) destiné à recevoir un fluide,
- deux pompes ($P_1$, $P_2$) connectées en parallèle audit conduit d'entrée, et
- un conduit de sortie relié aux sorties des deux pompes ($P_1$, $P_2$), au moins l'une des deux pompes étant commandée par un variateur de vitesse (VSD), chaque pompe ($P_1$, $P_2$) étant définie par une courbe caractéristique débit-hauteur manométrique à vitesse maximale,
- ledit système comportant une unité de traitement (UC) comprenant :
- un module (M2) de détermination d'une première expression de la hauteur manométrique ($H_{MPS}$) du système multipompes à partir des caractéristiques du système multipompes, lesdites caractéristiques du système étant :

- la pression ($P_{OUT}$) du fluide, mesurée à un premier point de mesure situé sur le conduit de sortie,
- la pression ($P_{IN}$) du fluide, mesurée à un deuxième point de mesure situé sur le conduit d'entrée,
- le diamètre ($D_{OUT}$) du conduit de sortie au premier point de mesure,
- le diamètre ($D_{IN}$) du conduit d'entrée au deuxième point de mesure,
- la différence (Z) de hauteur entre le premier point de mesure et le deuxième point de mesure,

- un module (M21) de détermination d'une deuxième expression de la hauteur manométrique ($H_{MPS}$) du systeme multipompes en fonction du débit total ($Q_{total}$) à partir de la vitesse ($W_n$) de chaque pompe, et de la courbe caractéristique débit-hauteur manométrique ($HQ_{curve\_n}$) à vitesse maximale de chaque pompe, un module (M22) de détermination du débit total ($Q_{total}$) du fluide à travers le conduit de sortie (OUT) à partir de la première expression de la hauteur manométrique ($H_{MPS}$) et de la deuxième expression de la hauteur manométrique ($H_{MPS}$), le débit total correspondant à un point d'intersection d'une première courbe correspondant à la première expression et d'une deuxième courbe correspondant à la deuxième expression.

**Patentansprüche**

1. Steuerungsverfahren, das in einer Bearbeitungseinheit (UC) eingesetzt wird, die bei der Steuerung eines Mehrpumpensystems verwendet wird, wobei das Mehrpumpensystem eine Eingangsleitung (IN), die dazu bestimmt ist, ein Fluid aufzunehmen, zwei Pumpen ($P_1$, $P_2$), die parallel an die Eingangsleitung angeschlossen ist, und eine Ausgangsleitung umfasst, die mit den Ausgängen der beiden Pumpen ($P_1$, $P_2$) verbunden ist, wobei mindestens eine der beiden Pumpen von einem Umrichter (VSD) gesteuert wird, wobei das Verfahren dazu bestimmt ist, die Gesamtdurchflussmenge ($Q_{total}$) des Fluids auf der Ausgangsleitung (OUT) zu bestimmen, wobei jede Pumpe ($P_1$, $P_2$) durch eine charakteristische Kurve Durchflussmenge-manometrische Höhe bei Maximalgeschwindigkeit definiert ist, wobei das Steuerungsverfahren die folgenden Schritte umfasst:

- Bestimmen eines ersten Ausdrucks der manometrischen Höhe ($H_{MPS}$) des Mehrpumpensystems auf Basis der Merkmale des Mehrpumpensystems, wobei die Merkmale des Systems sind:

- der Druck ($P_{OUT}$) des Fluids, gemessen an einem ersten Messpunkt, der sich auf der Ausgangsleitung befindet,
- der Druck ($P_{1N}$) des Fluids, gemessen an einem zweiten Messpunkt, der sich auf der Eingangsleitung befindet,
- der Durchmesser ($D_{OUT}$) der Ausgangsleitung am ersten Messpunkt,
- der Durchmesser ($D_{IN}$) der Eingangsleitung am zweiten Messpunkt,
- die Höhendifferenz (Z) zwischen dem ersten Messpunkt und dem zweiten Messpunkt,

- Bestimmen eines zweiten Ausdrucks der manometrischen Höhe ($H_{MPS}$) des Mehrpumpensystems in Abhängigkeit von der Gesamtdurchflussmenge ($Q_{total}$) auf Basis der Geschwindigkeit ($W_n$) jeder Pumpe und der charakteristischen Kurve Durchflussmenge-manometrische Höhe ($HQ_{curve-n}$) bei Maximalgeschwindigkeit jeder Pumpe,
- Bestimmen der Gesamtdurchflussmenge ($Q_{total}$) des Fluids durch die Ausgangsleitung (OUT) auf Basis des ersten Ausdrucks der manometrischen Höhe ($H_{MPS}$) und des zweiten Ausdrucks der manometrischen Höhe ($H_{MPS}$), wobei die Gesamtdurchflussmenge einem Schnittpunkt einer ersten Kurve entsprechend dem ersten Ausdruck und einer zweiten Kurve entsprechend dem zweiten Ausdruck entspricht.

2. Verfahren nach Anspruch 1, **dadurch gekennzeichnet, dass** es einen Schritt des Bestimmens der manometrischen Höhe ($H_{MPS}$) des Mehrpumpensystems auf Basis des ersten Ausdrucks der manometrischen Höhe und des zweiten Ausdrucks der manometrischen Höhe umfasst.

3. Verfahren nach Anspruch 2, **dadurch gekennzeichnet, dass** es für jede Pumpe ($P_1$, $P_2$) einen Schritt des Bestimmens der Durchflussmenge ($Q_{Pn}$) am Ausgang der Pumpe auf Basis der bestimmten manometrischen Höhe ($H_{MPS}$) und der charakteristischen Kurve Durchflussmenge-manometrische Höhe ($HQ_{curve-n}$) der Pumpe, die auf die Geschwindigkeit der Pumpe extrapoliert wurde, umfasst.

4. Verfahren nach einem der Ansprüche 1 bis 3, **dadurch gekennzeichnet, dass** die Geschwindigkeit der Pumpe ($W_n$), die durch den Umrichter kontrolliert wird, auf Basis der Geschwindigkeitsreferenz, die in eine Regelschleife eingeleitet wird, oder einer Geschwindigkeitsmessung bestimmt wird.

5. Mehrpumpensystem, umfassend:

- eine Eingangsleitung (IN), die dazu bestimmt ist, ein Fluid aufzunehmen,
- zwei Pumpen ($P_1$, $P_2$), die parallel an die Eingangsleitung angeschlossen sind, und
- eine Ausgangsleitung, die an die Ausgänge der beiden Pumpen ($P_1$, $P_2$) angeschlossen ist, wobei mindestens eine der beiden Pumpen von einem Geschwindigkeitsregler (VSD) gesteuert wird, wobei jede Pumpe ($P_1$, $P_2$) durch eine charakteristische Kurve Durchflussmenge-manometrische Höhe bei Maximalgeschwindigkeit definiert ist,
- wobei das System eine Bearbeitungseinheit (UC) besitzt, umfassend:
- ein Modul (M2) zum Bestimmen eines ersten Ausdrucks der manometrischen Höhe ($H_{MPS}$) des Mehrpumpensystems auf Basis der Merkmale des Mehrpumpensystems, wobei die Merkmale des Systems sind:

- der Druck ($P_{OUT}$) des Fluids, gemessen an einem ersten Messpunkt, der sich auf der Ausgangsleitung befindet,
- der Druck ($P_{IN}$) des Fluids, gemessen an einem zweiten Messpunkt, der sich auf der Eingangsleitung befindet,
- der Durchmesser ($D_{OUT}$) der Ausgangsleitung am ersten Messpunkt,
- der Durchmesser ($D_{IN}$) der Eingangsleitung am zweiten Messpunkt,
- die Höhendifferenz (Z) zwischen dem ersten Messpunkt und dem zweiten Messpunkt,

- ein Modul (M21) zum Bestimmen eines zweiten Ausdrucks der manometrischen Höhe ($H_{MPS}$) des Mehrpumpensystems in Abhängigkeit von der Gesamtdurchflussmenge ($Q_{total}$) auf Basis der Geschwindigkeit ($W_n$) jeder Pumpe und der charakteristischen Kurve Durchflussmenge-manometrische Höhe ($HQ_{curve-n}$) bei Maximalgeschwindigkeit jeder Pumpe, ein Modul (M22) zum Bestimmen der Gesamtdurchflussmenge ($Q_{total}$) des Fluids durch die Ausgangsleitung (OUT) auf Basis des ersten Ausdrucks der manometrischen Höhe ($H_{MPS}$) und des zweiten Ausdrucks der manometrischen Höhe ($H_{MPS}$), wobei die Gesamtdurchflussmenge einem Schnittpunkt einer ersten Kurve entsprechend dem ersten Ausdruck und einer zweiten Kurve entsprechend dem zweiten Ausdruck entspricht.

**Claims**

1. Control method implemented in a processing unit (UC) used in the control of a multi-pump system, said multi-pump system comprising an inlet pipe (IN) intended to receive a fluid, two pumps ($P_1$, $P_2$) connected in parallel to said inlet pipe and an outlet pipe connected to the outlets of the two pumps ($P_1$, $P_2$), at least one of the two pumps being controlled by a variable speed drive (VSD), said method being intended to determine the total flow rate ($Q_{total}$) of fluid on said outlet pipe (OUT), each pump ($P_1$, $P_2$) being defined by a characteristic pump curve of flow rate against head at maximum speed, the control method comprising the following steps:

   - determining a first expression of the head ($H_{MPS}$) of the multi-pump system from characteristics of the multi-pump system, said characteristics of the system being:

      - the pressure ($P_{OUT}$) of the fluid, measured at a first measurement point situated on the outlet pipe,
      - the pressure ($P_{IN}$) of the fluid, measured at a second measurement point situated on the inlet pipe,
      - the diameter ($D_{OUT}$) of the outlet pipe at the first measurement point,
      - the diameter ($D_{IN}$) of the inlet pipe at the second measurement point,
      - the difference (Z) in height between the first measurement point and the second measurement point,

   - determining a second expression of the head ($H_{MPS}$) of the multi-pump system as a function of the total flow rate ($Q_{total}$) from the speed ($W_n$) of each pump and from the characteristic pump curve of flow rate against head ($HQ_{curve-n}$) at maximum speed for each pump,
   - determining the total flow rate ($Q_{total}$) of fluid through the outlet pipe (OUT) from the first expression of head ($H_{MPS}$) and from the second expression of head ($H_{MPS}$), the total flow rate corresponding to a point of intersection of a first curve corresponding to the first expression and of a second curve corresponding to the second expression.

2. Method according to Claim 1, **characterized in that** it comprises a step of determining the head ($H_{MPS}$) of the multi-pump system from the first expression of head and from the second expression of head.

3. Method according to Claim 2, **characterized in that**, for each pump ($P_1$, $P_2$), it comprises a step of determining the flow rate ($Q_{Pn}$) at the pump outlet from the determined head ($H_{MPS}$) and from the characteristic pump curve of flow rate against head ($HQ_{curve\_n}$), extrapolated to the speed of the pump.

4. Method according to one of Claims 1 to 3, **characterized in that** the pump speed ($W_n$) controlled by the variable speed drive is determined from the speed reference injected into a regulation loop or from a speed measurement.

5. Multi-pump system comprising:

   - an inlet pipe (IN) intended to receive a fluid,
   - two pumps ($P_1$, $P_2$) connected in parallel to said inlet pipe, and
   - an outlet pipe connected to the outlets of the two pumps ($P_1$, $P_2$), at least one of the two pumps being controlled by a variable speed drive (VSD), each pump ($P_1$, $P_2$) being defined by a characteristic pump curve of flow rate against head at maximum speed,
   - said system comprising a processing unit (UC) comprising:
   - a module (M2) for determining a first expression of the head ($H_{MPS}$) of the multi-pump system from characteristics of the multi-pump system, said characteristics of the system being:

      - the pressure ($P_{OUT}$) of the fluid, measured at a first measurement point situated on the outlet pipe,
      - the pressure ($P_{IN}$) of the fluid, measured at a second measurement point situated on the inlet pipe,
      - the diameter ($D_{OUT}$) of the outlet pipe at the first measurement point,
      - the diameter ($D_{IN}$) of the inlet pipe at the second measurement point,
      - the difference (Z) in height between the first measurement point and the second measurement point,

   - a module (M21) for determining a second expression of the head ($H_{MPS}$) of the multi-pump system as a function of the total flow rate ($Q_{total}$) from the speed ($W_n$) of each pump and from the characteristic pump curve of flow rate against head ($HQ_{curve-n}$) at maximum speed for each pump, a module (M22) for determining the total flow rate (Qtotal) of the fluid through the outlet pipe (OUT) from the first expression of head (HMPS) and from the second expression of head (HMPS), the total flow rate corresponding to a point of intersection of a first curve corresponding to the first expression and of a second curve corresponding to the second expression.

**Fig. 1**

**Fig. 2**

Fig. 3

EP 2 743 508 B1